# EUROPEAN PATENT SPECIFICATION

(11) **EP 3 099 392 B1**
(45) Date of publication and mention of the grant of the patent: **28.11.2018**
(21) Application number: 15704077.5
(22) Date of filing: 29.01.2015
(51) Int. Cl.: B01D 5/00, B01D 3/14, C02F 103/08, C02F 103/32, C02F 103/34, C02F 103/36, B01D 1/14, C02F 1/10, C02F 103/10

(54) **COUNTER CURRENT LIQUID GAS EVAPORATION AND CONDENSATION APPARATUS AND METHOD WITH FRAGMENTATION PLATES**
GEGENSTROMFLÜSSIGGASVERDAMPFUNGS- UND -KONDENSIERUNGS- VORRICHTUNG UND VERFAHREN MIT FRAGMENTIERUNGSPLATTEN
APPAREIL ET MÉTHODE D'ÉVAPORATION ET DE CONDENSATION LIQUIDE GAZ À CONTRE-COURANT AVEC PLATEAUX DE FRAGMENTATION

(30) Priority: 31.01.2014 WO PCT/GB2014/050276
(43) Date of publication of application: 07.12.2016
(73) Proprietor: LAT Water Limited, Aylesbury, Buckinghamshire HP19 8EA (GB)
(72) Inventor: HARDIMAN, Mark Christian, Newbury, Berkshire RG14 1PA (GB)
(74) Representative: Hancox, Jonathan Christopher
(86) International application number: PCT/GB2015/050211
(87) International publication number: WO 2015/114342

(56) References cited:
- WO-A1-2012/156646
- WO-A1-2013/043568
- WO-A1-2014/014660
- DE-A1- 10 215 079
- DE-A1-102007 014 807
- FR-A1- 2 289 228
- US-A1- 2001 015 072

## Description

The present invention relates to a method and apparatus for purifying a fluid, and in particular to evaporation/condensation units useful in the purification of fluids, as well as to desalination/purification methods employing such units.

There is a growing global shortage of fresh water. Fresh water consumption grows at faster rates than economic growth, yet the availability of traditional fresh water supplies are essentially fixed. 97% of water on earth is in the form of salt water. Thus, finding energy efficient and environmentally friendly methods of desalination are important challenges to solving the global shortage of fresh water.

Recent attempts to improve desalination technology have focussed on the gradual improvement of pre-existing technologies. Broadly speaking, there are two main classes of desalination technology. The first class is membrane-based technology, for example reverse osmosis, where sea water is passed through a selective membrane. The second class of desalination technology is thermal / evaporative technology, for example multi stage flash and multi effect humidification, which purify water through distillation.

Both classes of technology, as used to date, have significant drawbacks including high set up / operating costs, high energy input requirements and / or the production of pollution.

In addition to the desalination of sea water, such technologies have been employed to clean contaminated water. Many industries utilise water as a raw material resulting in the contamination of that water. Examples of such industries include mining / ore concentration, chemical processing and refinement, oil refinement, breweries, crude oil / gas extraction including hydraulic fracturing. Cleaning water contaminated in these types of industry is typically expensive and requires the input of high levels of energy as with desalination.

In an attempt to reduce the energy requirements of thermal / evaporative purification technology, processes have been developed which utilise either waste heat and / or alternative energy sources such as solar power.

Additionally, attempts have been made to develop 'low temperature' processes of purification, in which water is distilled at temperatures below 100°C through the use of reduced pressure or fragmentation of water to produce droplets to maximise evaporation rates.

Many evaporative processes have looked at using nozzles to achieve fragmentation. The use of nozzles in such processes has been found to be problematic for several reasons. For example, nozzles used in this way are typically prone to corrosion or scaling. This increases operational cost due to the need to replace damaged nozzles. Further, the increase in the resistance of fluid passing through the nozzles means that higher amounts of energy are required to pump fluid therethrough.

Additional 'low temperature' purification technologies are based on the "solar still" concept of passive desalination. However, they are limited in scale to producing a maximum of a few hundred litres of cleaned fluid per day.

An example of a low temperature fluid purification system is disclosed in WO02/09837. The process disclosed in that document makes use of an external source of heat for warming input sea water. Essential to that process is the use of low pressure chambers which are costly to acquire and operate.

Another known low temperature fluid purification system is Mage-TiNOX (http://www.mage-watermanagement.com/). This is a solar powered multi effect humidification desalination technology. Disadvantageously, the technology requires heavy and expensive metal pressure vessels.

Therefore, there remains a need for low temperature fluid purification technology which addresses and ideally overcomes some or all of these and other drawbacks known from conventional fluid purification systems.

WO2013/043568 (Massachusetts Institute of Technology) discloses a bubble-column vapor mixture condenser which can be used in a humidification-dehumidification system for purifying a liquid such as water.

In accordance with a first aspect, the invention provides apparatus for purifying a fluid, comprising an evaporation unit and a condensing unit,
wherein the evaporation unit comprises an evaporation unit chamber having upper and lower regions and side walls, a contaminated fluid inlet located in the upper region, a waste outlet located in the lower region and a plurality of vertically-spaced fragmentation plates each spanning at least a part of the width of the chamber and each defining the upper limit of an evaporation zone, wherein each evaporation zone is provided with a fluid vapour outlet;
wherein the condensing unit comprises a condensing unit chamber having upper and lower regions and side walls, a condensing fluid inlet located in the upper region, a condensed fluid outlet located in the lower region and a plurality of vertically-spaced fragmentation plates each spanning at least a part of the width of the chamber and each defining the upper limit of a condensation zone, wherein each condensation zone is provided with a fluid vapour inlet,
wherein the fluid vapour outlet of the uppermost evaporation zone is connected to the fluid vapour inlet of the lowermost condensation zone,
wherein the fluid vapour outlet of the lowermost evaporation zone is connected to the fluid vapour inlet of the uppermost condensation zone,
wherein the plurality of evaporation zones are operated at different temperatures with the uppermost evaporation zone being operated at the highest temperature and the lowermost evaporation zone being operated at the lowest temperature,
wherein the plurality of condensation zones are operated at different temperatures with the uppermost condensation zone being operated at the lowest temperature and the lowermost condensation zone being operated at the highest temperature, and
wherein the apparatus is configured so that the contaminated fluid flows through the evaporation unit chamber to become at least partly evaporated and that the condensing fluid flows through the condensing unit chamber resulting in the evaporated fluid becoming at least partly condensed.

In preferred embodiments, the fluid vapour outlet of the evaporation zone operated at the second highest temperature is connected to the fluid vapour inlet of the condensation zone operated at the second highest temperature, and the fluid vapour outlet of the evaporation zone operated at the second lowest temperature is connected to the fluid vapour inlet of the condensation zone operated at the second lowest temperature. This system of interconnection (based on matching temperatures or based on opposite height order) may be employed for any number of zones.

In accordance with a second aspect, the invention relates to a method for purifying a fluid comprising:
providing an evaporation unit comprising an evaporation unit chamber having upper and lower regions and side walls, a contaminated fluid inlet located in the upper region, a waste outlet located in the lower region and a plurality of spaced-apart fragmentation plates each spanning at least a part of the width of the chamber and each defining the upper limit of an evaporation zone;
providing a condensing unit comprising a condensing unit chamber having upper and lower regions and side walls, a condensing fluid inlet located in the upper region, a condensed fluid outlet located in the lower region and a plurality of spaced-apart fragmentation plates each spanning at least a part of the width of the chamber and each defining the upper limit of a condensation zone;
supplying contaminated fluid to the contaminated fluid inlet of the evaporation unit and allowing the contaminated fluid to flow through the evaporation unit chamber to become at least partly evaporated;
operating the plurality of evaporation zones at different temperatures from each other and operating the plurality of condensation zones at different temperatures from each other;
feeding fluid vapour from the evaporation zone operated at the highest temperature to the condensation zone operated at the highest temperature;
feeding fluid vapour from the evaporation zone operated at the lowest temperature to the condensation zone operated at the lowest temperature;
supplying condensing fluid to the condensing fluid inlet of the condensing unit and allowing the condensing fluid to flow through the condensing unit chamber resulting in the evaporated fluid becoming at least partly condensed; and
extracting the condensed fluid from the condensing unit chamber,
wherein the uppermost evaporation zone is operated at the highest temperature and the lowermost evaporation zone is operated at the lowest temperature, and the uppermost condensation zone is operated at the lowest temperature and the lowermost condensation zone is operated at the highest temperature.

Thus, at least in its preferred embodiments, the invention provides an evaporation unit for use in the purification of a fluid comprising a chamber configured such that when the unit is in use, the chamber has upper and lower regions and side walls, the chamber further comprising a contaminated fluid inlet located in the upper region, a waste outlet located in the lower region, a fluid vapour outlet, and at least one fragmentation plate spanning at least a part of the chamber, the fragmentation plate comprising fragmentation means.

A major challenge to devising improvements to low-energy fluid purification technology is the need to reliably evaporate liquid without the input of significant amounts of energy and the use of low pressure. The inventors of the subject matter described herein have developed an evaporation unit in which this goal is achieved. As with certain prior art processes, evaporation is achieved via the fragmentation of fluid. However, in the evaporation unit of the present invention, fragmentation is achieved simply by allowing fluid to flow through fragmentation means provided in fragmentation plate/s and fall through the chamber resulting in evaporation; thus fragmentation is advantageously achieved without the need to operate the chamber at low pressure and without the use of nozzles.

As used herein, the term 'fluid' is used to encompass any liquid substance. In embodiments of the invention, the fluid may be water.

The term 'contaminated' is used to define a fluid as containing impurities which can be separated therefrom using distillation. In embodiments of the invention, the impurities may be dissolved or suspended in the fluid. Examples of contaminated fluids which may be purified using embodiments of the present invention include sea water, salt water, brackish water, waste water and grey water.

Heated contaminated fluid is fed onto the upper surface of a fragmentation plate. The contaminated fluid may be heated using any suitable heat source. In preferred embodiments, the contaminated fluid is heated by solar power, waste heat and / or exhaust heat. The waste / exhaust heat may be generated as a by-product in an industrial process, for example fossil-fuel or nuclear power generation. The contaminated fluid may be heated directly, or indirectly, for example via a heat exchanger.

In embodiments of the present invention, the pressure within the chamber is atmospheric pressure and / or the heated contaminated fluid flows through the fragmentation means under gravity alone, i.e. without any mechanical assistance.

In preferred embodiments of the present invention, the chamber further comprises a heated air inlet. The heated air flowed into the chamber (which may itself comprise a small proportion of fluid vapour) through the fragmented fluid falling through the chamber assists with evaporation of the fragmented fluid. The rate of evaporation is improved when the heated air inlet is located in the lower region of the chamber as the heated air rises through the chamber due to convection, resulting in a counterflow against the flow of fragmented fluid. Heated air may be pumped into the chamber using any means known to those skilled in the art, including fans. In an alternative embodiment, the air may not be heated.

One, some or all of the fragmentation plates present may have any shape when viewed from above (e.g. they may be circular, square, polygonal) or thickness (e.g. ≤ about 1mm, ≤ about 2mm, ≤ about 5mm). One, some or all of the fragmentation plates which are employed may be formed of any material which is resistant to the evaporation process (e.g. steel, aluminium, plastics) and / or be provided with upturned edges.

Any number of fragmentation plates may be employed in the chamber of the present invention. Use of a plurality of fragmentation plates is preferred, e.g. a number ranging from 1, 2 or 3 to 4, 5, 6, 7, 8 or more may be used. In certain embodiments, the number of fragmentation plates used ranges from 2 to 7, or 3 to 5.

Each fragmentation plate defines the upper limit of an evaporation zone. Thus, for embodiments including a single fragmentation plate, a single evaporation zone exists, extending downwardly from the fragmentation plate. In evaporation units comprising a plurality of fragmentation plates, the uppermost evaporation zone will be defined at its upper end by the uppermost fragmentation plate and at its lower end by the next highest fragmentation plate.

Depending on the spacing between the fragmentation plates, the height of the evaporation zones will vary. The greater the height of the evaporation zone, the greater the velocity of fragmented fluid falling therethrough. The variation of air speed thus achieves a similar effect to that of lowering the air pressure at a lower energy cost.

The relative temperatures, air flows and section sizing are calculated by using the concept of enthalpy conservation between masses / volumes of the air and fluid flows involved using standard psychometric calculators, for example: http://www.psychrometric-calculator.com/HumidAirWeb.aspx

In embodiments of the invention, the evaporation zones have heights of from about 75 cm to about 200 cm.

To enable users of the evaporation unit to tailor the velocity of the fragmented fluid through the chamber, the location and / or height of one, some or all of the fragmentation plates may be variable. In embodiments, the height / location of all of the fragmentation plates may be variable. Alternatively, the lowermost and / or uppermost fragmentation plates may be fixed while the height / location of some or all of the other fragmentation plates may be variable.

It may be preferable to maintain the evaporation zones at differing temperatures. Thus, in embodiments of the invention, one, some or all of the evaporation zones are provided with temperature control means. Additionally or alternatively, the temperature in the evaporation zones may be controlled by adjusting the temperature and / or flow rate of heated air into the chamber as a whole or into some or all of the individual evaporation zones. This may be achieved through the use of a series of pumps and / or fans.

It is envisaged that in operation of evaporation units in which a plurality of evaporation zones are present, owing to the effects of convection, the uppermost evaporation zone/s will operate at higher temperatures and the lower evaporation zone/s will operated at lower temperatures. Thus, in such embodiments, the uppermost evaporation zone may operate at a temperature of about 60°C or about 70°C to about 80°C or about 90°C, and the lowermost evaporation zone may operate at a temperature of about 40°C or about 50°C to about 60°C or about 70°C. Evaporation zones intermediate of the uppermost and lowermost evaporation zones (if present) may be operated at a temperature intermediate of the operating temperature of the uppermost and lowermost evaporation zones.

It is also envisaged that in operation of evaporation units in which a plurality of evaporation zones are present, the fluid vapour content of the uppermost evaporation zone will be higher than that of the lowermost evaporation zone. Evaporation zones intermediate of the uppermost and lowermost evaporation zones (if present) may have a vapour content intermediate of the vapour content of the uppermost and lowermost evaporation zones.

The fragmentation means provided in one, some or all of the fragmentation plates preferably comprise openings through the fragmentation plate/s. These (when viewed from above) may have any shape, for example, circular, square, rectangular, star-shaped, other polygonal or a mixture thereof. The openings may be provided in a regular or irregular pattern.

They are preferably sized to maximise the fragmentation of fluid to be evaporated. For example, the average diameter of the openings may range from about 0.5mm, about 1mm, about 1.5mm to about 5mm, about 7.5mm or about 10mm. Additionally or alternatively, the openings may have an average area ranging from about 1mm, about 2mm, about 3mm to about 10mm, about 15mm or about 20mm.

In an alternative embodiment to the openings described above, one or more of the fragmentation plates are provided with a rim, the upper edge of the rim being provided with a series of notches around its perimeter. The notches are preferably configured to provide an even distribution of fluid into the evaporation chamber. In order that an even distribution of fluid occurs, it is preferable that the fragmentation plate is substantially level (i.e. horizontal). To achieve this, a level-adjusting system is preferably provided for the fragmentation plate to facilitate accurate levelling when the unit is installed. In preferred arrangements, adjusting screws are provided, preferably three screws at 120° intervals, around the fragmentation plate.

The notches (when viewed from the side) may have any shape, for example, circular, square, rectangular, star-shaped, other polygonal or a mixture thereof. The openings may be provided in a regular or irregular pattern and should preferably be in size no more than 25% of the height of the rim of the fragmentation plate.

To further maximise fragmentation, one, some or all of the evaporation zones may be provided with fragmentation bodies. Examples of such bodies include Raschig rings and the like. The fragmentation bodies are preferably formed of electrochemically inert material such as plastic, ceramic or stainless steel. In some embodiments, the fragmentation bodies, where present, are supported by coupling or mounting in the walls of the chamber, or by being provided on a support, e.g. an electrochemically inert support grill.

The fragmentation plate/s employed in aspects of the present invention are preferably generally planar and have a width which exceeds thickness at least fivefold. The fragmentation plate/s have an upper surface which is preferably substantially flat. However, arrangements in which the upper surface is slightly concave, convex or the like may also be employed.

As mentioned above in relation to the notched-rim fragmentation plate embodiment, it is preferable that each fragmentation plate is substantially horizontal. This applies to all types of fragmentation plate, and ensures optimum performance of the unit. However, some embodiments may work adequately provided they are within a certain tolerance of horizontal, as discussed below.

One, some or all of the fragmentation plates which are used in the evaporation unit of the present invention preferably have planes which are generally perpendicular to a vertical axis of the chamber. The term 'generally perpendicular' as used herein means that the planes of the fragmentation plate/s deviate by no more than about 20° from a horizontal plane perpendicular to the vertical axis of the chamber, or more preferably, by no more than 10°, 5° or 2°.

Where a plurality of fragmentation plates are present, it is preferred that the planes of at least two of the plates are generally parallel. In certain embodiments, the planes of all fragmentation plates present in the evaporation unit are generally parallel. The term 'generally parallel as used herein means that the planes of the fragmentation plate/s vary by no more than about 20°, or more preferably, by no more than 10°, 5° or 2°.

To enable the counterflow of heated air from the lower region of the chamber against the heated contaminated fluid passing down the chamber, the fragmentation plates preferably span some but not the entire diameter of the chamber. Thus, in embodiments of the invention, one, some or all of the fragmentation plates may extend at least about 50%, at least about 60%, at least about 70% or at least about 80% of the diameter of the chamber.

Additionally or alternatively, one, some or all of the fragmentation plates may extend partly or entirely across the chamber and may comprise a vapour passage.

One exception to this may be the uppermost fragmentation plate, i.e. that which is in closest proximity to the contaminated fluid inlet, which in some embodiments may extend across the entire chamber and / or not be provided with a vapour passage.

An alternative embodiment is to use a perforated plate or grating for all but the uppermost fragmentation plate. This embodiment is advantageous in offering lower resistance to the air flows.

The fragmentation plate/s included in the evaporation unit of the present invention are preferably located within the chamber such that fluid entering the chamber via the contaminated fluid inlet passes directly or is easily directed to the upper surface of the closest fragmentation plate. Thus, in some embodiments of the present invention, the vertical axis of the chamber extending downwardly from the contaminated fluid inlet passes through the fragmentation plate closest to the contaminated fluid inlet (and, in certain embodiments, through all of the fragmentation plates present).

Where a plurality of fragmentation plates are present, these are preferably located such that some if not all contaminated fluid can fall directly from one fragmentation plate to another without the need for additional means to direct the contaminated fluid from one plate to another. However, in certain embodiments, the side walls of the chamber may be provided with fluid direction means.

Thus, where a plurality of fragmentation plates are employed, it is preferable that at least 2 of the fragmentation plates (and more preferably, that all of them), when viewed from the upper region of the chamber along a vertical axis of the chamber (i.e. down through the chamber) overlap at least partly, or more preferably, completely. Such an arrangement could serve to increase air flow resistance, and therefore the alternative embodiment to use a perforated plate or grating for all but the uppermost fragmentation plate could be employed to mitigate the increased resistance.

During use of the evaporation unit of the present invention, it is anticipated that components of the unit will become corroded or scaled, for example the fragmentation plates, the fragmentation bodies and / or the chamber itself. Additionally or alternatively, in certain emergency situations, rapid delivery (e.g. via air) and deployment of the fluid evaporation unit may be critical. Thus, in embodiments of the invention, the evaporation unit is modular.

For example, one, some or all of the fragmentation plates and / or fragmentation bodies present may be separable (preferably manually separable) from the chamber or from means provided in the chamber for mounting or supporting the fragmentation plate / fragmentation body. Arranging the evaporation unit in this way advantageously enables corroded or scaled fragmentation plates / bodies to be easily removed from the unit and replaced / descaled with minimal operating down time.

Additionally or alternatively, the chamber may be provided as a series of components which can be coupled together.

While use of the evaporation unit of the present invention will result in the evaporation of a significant proportion of the contaminated feed, there will be a portion of unevaporated fluid that falls through the chamber into the lower region. The proportion of impurities and contaminants in this portion of fluid will be higher than that present in the contaminated fluid feed. While this will typically prevent that portion of fluid being fed back into the contaminated fluid feed, in embodiments of the invention, the evaporation unit is provided with waste separation means to separate a highly contaminated soiled fluid feed (i.e. a highly concentrated fluid having a concentration of impurities / contaminants preventing it from being fed back into the contaminated fluid feed) and a contaminated fluid feed (which can be fed back into the contaminated fluid feed).

The chamber may be formed from any material which exhibits an acceptable degree of resistance to the conditions and reagents employed using the process of the present invention. Advantageously, because the process of the present invention does not require low pressures to function effectively, the chamber of the evaporation unit does not need to be as robust (and costly) as those employed in 'low temperature' fluid purification processes of the prior art.

The chamber may be any shape in cross section, for example, circular, oval, square or rectangular. Chambers with circular cross sections may be simply manufactured and have structural rigidity, but other shaped chambers can be used without a loss of efficiency. In certain embodiments, the shape of the chamber in cross section is broadly the same shape as one, some or all of the fragmentation plates located therein.

In embodiments of the invention, a chamber may be employed in the evaporation unit having a height of between about 2 and 20 metres or about 5 to 15 metres. The chamber may have a diameter of from about 20cm to about 2 metres, or from about 50cm to about 1 metre.

Fluid vapour generated in the evaporation unit of the present invention is preferably extracted from the chamber via one or more fluid vapour outlets. The fluid vapour outlets are preferably located in a side wall of the chamber and / or are preferably provided with barriers (e.g. bodies formed of Munters DRIFdek) to prevent contamination of the exiting, purified fluid vapour with contaminated fluid. In certain embodiments, each evaporation zone is provided with a fluid vapour outlet.

A plurality of fluid vapour outlets may be provided in each evaporation zone, preferably located adjacent to and below the upper fragmentation plate defining the upper limit of the evaporation zone. The fluid vapour outlets are preferably spaced equally around the perimeter of the evaporation chamber. A plurality of outlets is preferred e.g. a number between 2 to 8. The outlets should be spaced to achieve a compromise between maximum vapour extraction whilst minimising obstruction to the air flow. In a preferred embodiment of the invention, six outlets are used spaced at 60° intervals.

Preferably, as mentioned above, any fragmented fluid extracted by the individual outlets should be minimal or zero to prevent cross contamination. In order to achieve this, the outlets are preferably inclined downwards at an angle of preferably greater than 10° and less than 45°. In a preferred embodiment of the invention an angle of 20° was selected. The mouth of the outtake should preferably be on the underside and may be fitted with a standard commercial drift eliminator to further prevent fluid transmission. A further preferred feature to prevent fluid transmission is to fit a small (e.g. 5mm to 10 mm) rim around the upper edge of the outlet so as to form an overhang protecting the outlet from possible fluid ingression.

The vapour from the individual outlets is preferably extracted into a torus for onward transfer.

Fluid vapour is preferably fed from the evaporation unit to a condensing unit. Those skilled in the art will be familiar with numerous types of condensing unit which may be used to condense fluid vapour obtained from the evaporation unit of the present invention.

However, in a preferred embodiment of the present invention, the evaporated fluid is preferably condensed by feeding that fluid into a condensation unit comprising a condensation chamber having upper and lower regions and side walls and comprising at least one fragmentation plate spanning at least a part of the chamber, the fragmentation plate comprising fragmentation means,
feeding condensing fluid into said chamber and onto an upper surface of the at least one fragmentation plate,
allowing the condensing fluid to flow through the fragmentation means downwardly through the chamber resulting in the evaporated fluid becoming at least partly condensed, and
extracting the condensed fluid from the chamber.

In embodiments of the present invention, the pressure within the condensation chamber is atmospheric pressure and / or the condensing fluid flows through the fragmentation means under gravity alone, i.e. without any mechanical assistance.

The condensing fluid is either purified fluid, i.e. fluid which has been purified using a purification apparatus, or pure fluid, i.e. a fluid which is obtained having a high degree of purity, or a mixture thereof. As an example, in the case of a water purification process, the cooling fluid may be water which has been subjected to a desalination process, or fresh water.

The condensing fluid is in liquid form and preferably has a temperature of about 0°C, about 10°C, about 20°C or about 30°C to about 40°C, about 50°C or about 60°C.

The condensing unit may be provided with the same structural features as the evaporation unit of the present invention and thus, the features of the evaporation unit as hereinbefore described may be comprised in the condensing unit.

For example, the chamber of the condensing zone may be sized / shaped as discussed above and or be of modular construction in the same way as the chamber of the evaporation zone may be. The height / location of the fragmentation plates may be variable (preferably manually adjustable) as discussed above.

In use, the fluid vapour is fed into the condensation chamber, for example via one or more fluid vapour inlets. Condensing fluid, in liquid form, is fed onto the upper surface of the fragmentation plate located in the chamber of the condensing unit. The condensing fluid then flows through the fragmentation means and falls through the chamber, thus increasing its surface area. As the condensing fluid flows through the heated fluid vapour, the vapour is cooled causing it to condense to form purified fluid.

This in turn causes the condensing fluid to be heated, but preferably not evaporated. The heated condensing fluid is preferably extracted from the chamber, along with the purified fluid, via a purified fluid outlet. This purified fluid outlet may be located in the lower region of the chamber.

The fluid extracted from the condensation chamber via the purified fluid outlet preferably has a total dissolved (TDS) content of less than about 100ppm, more preferably less than about 50ppm and most preferably less than about 20ppm.

In embodiments of the invention, the heated condensing fluid / purified fluid extracted from the chamber via a purified fluid outlet may be used to heat the contaminated fluid feed into the evaporation unit. If this is achieved using a heat exchanger, then the temperature of the condensing fluid / purified fluid mixture will be reduced meaning that it can be used as a condensing fluid to be fed back into the upper region of the condensation chamber. A portion of the condensing fluid / purified fluid mixture can additionally or alternatively be extracted from the system via a fresh fluid take off line.

The chamber of the condensation unit may be provided with a heated air outlet, which may be located in the upper region of the chamber. In embodiments of the invention, heated air (which may contain a relatively low proportion of water vapour) may be fed into the chamber of the evaporation unit via a heated air inlet.

As mentioned above, the condensing unit preferably has a similar structure to the evaporation unit. For example, the condensing unit may comprise a plurality of fragmentation plates having fragmentation means constructed as described above. The chamber of the condensation zone may comprise the number of fragmentation plates which may preferably be provided in the chamber of the evaporation zone, as discussed above. The fragmentation plates are preferably located / angled in the chamber of the condensing unit as discussed above.

The fragmentation plates will each define downwardly extending zones which, for clarity, will be referred to herein as condensation zones.

The condensing zones may also be provided with fragmentation bodies as described above and the fluid vapour inlet/s may be provided with barriers, again as described above.

In preferred embodiments, the fluid vapour feeds extending from the fluid vapour outlets positioned within the individual evaporation zones will be coupled to the specific condensation zones determined to maximise evaporation and condensation. More specifically, vapour extracted from each evaporation zone will vary both in terms of temperature and also fluid vapour content. Generally speaking, evaporation zones towards the upper end of the chamber of the evaporation unit will be at a higher temperature and vapour extracted from those chambers will be more heavily laden with fluid vapour than those lower down the chamber. In the condensing chamber, the condensation zones toward the top of the chamber will operate at a lower temperature whereas the condensation zones towards the lower part of the chamber of the condensation unit will be warmer.

It has been found that optimal results are achieved by feeding vapour extracted from the uppermost evaporation zone (which is operated at the highest temperature of the evaporation zones) into the condensation zone at the lowest part of the condensation chamber (which operates at the highest temperature of the condensation zones). Optimal results have also been achieved when vapour extracted from the lowermost evaporation zone (which operates at the lowest temperature of the evaporation zones) is fed into the uppermost condensation zone (which operates at the lowest temperature of the condensation zones). This system of interconnection can be continued for any number of additional evaporation/condensation zones. For example, the second hottest (and second highest) evaporation zone may be connected to the second lowest (and second hottest) condensing zone, and the second coolest (and second lowest) evaporation zone may be connected to the second highest (and second coolest) condensation zone.

As can be seen the invention provides not only an evaporation unit which overcomes problems of the prior art, but also a condensing unit which functions efficiently and provides similar advantages to the evaporation unit, especially when used with the evaporation unit.

Thus, according to at least preferred embodiments, the invention provides a condensing unit for use in the purification of a fluid comprising a condensation chamber configured such that when the unit is in use, the chamber has upper and lower regions and side walls, the chamber further comprising a condensing fluid inlet located in the upper region, a purified fluid outlet located in the lower region, a fluid vapour inlet, and at least one fragmentation plate spanning at least a part of the chamber, the fragmentation plate comprising fragmentation means.

In both of these aspects of the invention, the condensation chamber may be configured and constructed as hereinbefore described.

As those skilled in the art will recognise, in use, the apparatus and methods of all aspects of the present invention may be manually operated, or may be operated by a control system. Thus, according to a further preferred aspect of the present invention, there is provided a control system for controlling the units and methods of all aspect of the present invention.

Also provided according to an additional preferred aspect of the present invention is a data carrier comprising machine readable instructions for the control of a control system for controlling the units and methods of all aspect of the present invention.

The invention will now be further described by way of example only with reference to the accompanying figures in which:
Figure 1 is a view in cross section of an evaporation unit of the present invention;
Figure 2 is a view down the vertical axis of the chamber of an evaporation unit of the present invention in accordance with a preferred embodiment;
Figure 3 is a cross sectional view of the upper part of the evaporation chamber of the embodiment of Fig.2;
Figure 4 is shows a side elevation of part of the rim of a fragmentation plate in accordance with a preferred embodiment;
Figure 5 is a view of a fluid purification system of the present invention;
Figure 6 is a view in cross section of an evaporation unit in accordance with an alternative embodiment of the present invention; and
Figure 7 is a cross sectional view of the mid part of the evaporation chamber showing the air extraction points.

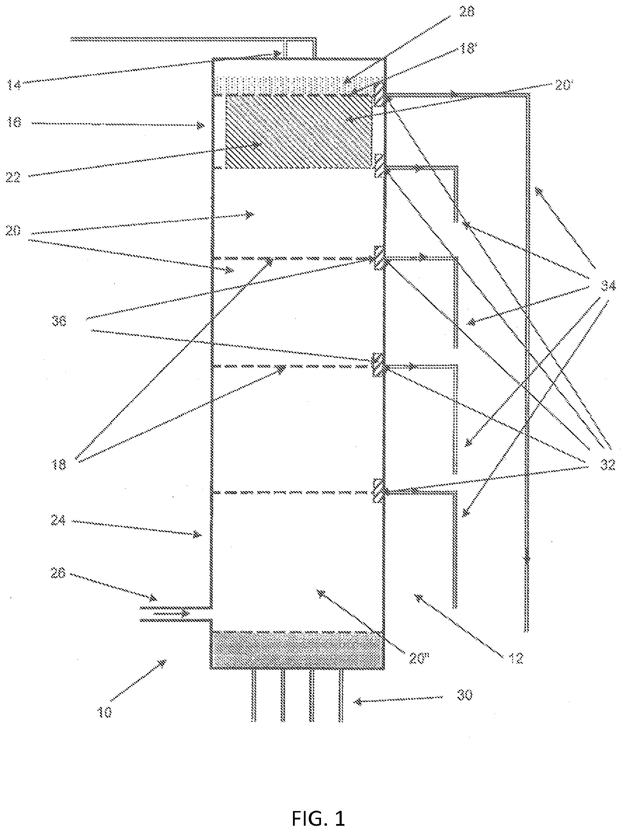

In Figure 1, an evaporation unit (10) is shown. The evaporation unit comprises a chamber (12) having a contaminated fluid feed (14) at its upper region (16).

The chamber (10) is sized to be have a height of 12 metres to allow containerisation allowing ease of transport (in a standard 40 foot container) and fast installation for rapid deployment in emergencies compared to other desalination or fluid treatment systems.

The top section of the evaporation unit is constructed as a removable module such that the fragmentation bodies (22) and uppermost fragmentation plate (18') can be lifted out of the device for external descaling. The maximum amount of scaling occurs in this uppermost part of the chamber and thus the easy removal of components from that part of the chamber allows external power washing of the packing medium and thus fast, low cost, descaling in an environmentally friendly manner reducing the down time normally associated with this activity.

The chamber is divided up into five evaporation zones (20) defined at their upper ends by fragmentation plates (18). In the illustrated example, all evaporation zones contain fragmentation bodies (22) for example Raschig rings although the fragmentation body is only shown in the uppermost evaporation zone.

Acceptable results can be obtained from evaporation units comprising only a single evaporation zone (20), but improved performance is observed when a plurality of evaporation zones (20) are present.

At the lower region (24) of the chamber (10), a heated air inlet (26) is provided.

In use, the evaporation unit (10) is fed with warm or hot fluid via feed (14). The fluid (28) is fed onto the upper surface of the uppermost fragmentation plate (18') provided with openings therein. The fragmentation plates (18) present may be circular, square or rectangular in shape, or be of other shapes. The openings in the fragmentation plates may be of variable diameters and be provided in a regular or irregular pattern, or of different sizes and shapes and configurations.

The hot fluid (28) fed onto the uppermost fragmentation plate (18') flows through the fragmentation openings and generates hot droplets of the liquid, which fall by gravity, through the chamber (10). The drops are further fragmented into smaller droplets by contacting a fragmentation body (22) such as an electrochemically inert random packing material. Such a material may be plastic, ceramic or stainless steel Raschig rings. The choice of fragmentation body depends on the type of fluid to be purified and the operating temperatures. The fragmentation body (22) may be supported by an electrochemically inert support grill which allows the fluid drops to pass into the next section.

Simultaneously heated air is pumped into the chamber (10) via heated air inlet (26) by fans into the lower region (24) of the chamber (10). The passage of heated air through the hot fluid droplets creates evaporation saturating the air with fluid vapour at varied temperatures.

The residual concentrated contaminant is collected at the bottom of the chamber for eventual discharge via waste outlet (30).

In order to maximise evaporation, the air speeds through the evaporation zones (20) are varied by configuring and optimising the heights of each zone (20), thus adjusting the volume that the air/vapour mix must pass through with the same input power from the fan. The variation of air speed thus achieves a similar effect to that of lowering the air pressure at a lower energy cost.

Fluid which has been evaporated can be removed from the chamber via a series of fluid vapour outlets (32) and are carried away via fluid vapour lines (34). Barriers (36), for example bodies formed of Munters DRIFdek or similar material are placed at the outlets in the chamber (10) to prevent any cross contamination of droplets in the air/gas flow and also to prevent any other possible contamination issues e.g. legionella. As can be seen, each evaporation zone (20) is provided with a vapour fluid outlet (32) at its upper end.

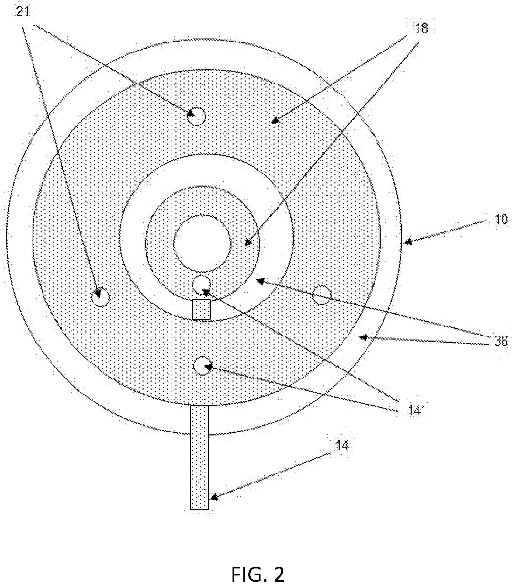

In Figure 2, a downward view through the chamber along its vertical axis is provided. In this arrangement, both the chamber (10) and the fragmentation plates (18) are circular. Only the uppermost fragmentation plate (18') is visible as the lower fragmentation plates (18) are positioned directly below the uppermost fragmentation plate (18). In other words, the uppermost fragmentation plate (18) overlaps the lower fragmentation plate (18) completely.

The fragmentation plates (18) extend partly (but not totally) across the chamber (10) to enable the upflow of heated air. To further facilitate this, the fragmentation plates (18) are provided with a vapour passage (38). The hot fluid is pumped upwards onto the uppermost fragmentation plate from the contaminated fluid feed (14) through a pipe in the base of the fragmentation plate (14'). The fragmentation plate is levelled by means of adjusting screws (21) located at 120° spacing around the fragmentation plate. Each fragmentation plate is fitted with such adjusting screws and levelled before use to ensure even distribution of fluid across the cross sectional area of the tower.

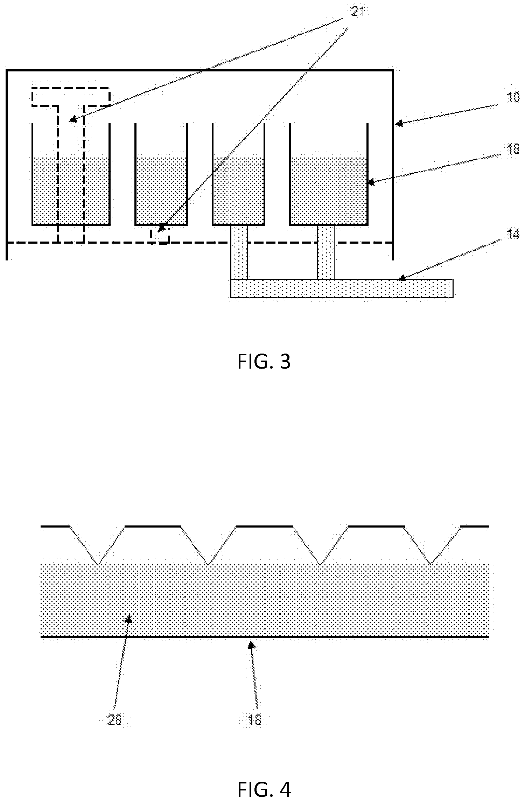

In Figure 3, a side view of the fragmentation plates (18) is shown illustrating the actual arrangement of the hot fluid inlets into the fragmentation plates (18), and the levelling screws (21). For simplicity only one screw is shown but in practice each fragmentation plate has 3 screws.

In Figure 4, a side elevation of part of the side of a fragmentation plate (18) is shown to illustrate the shape of the notches cut along the upper rim to facilitate the hot fluid (28) distribution into the evaporation chamber.

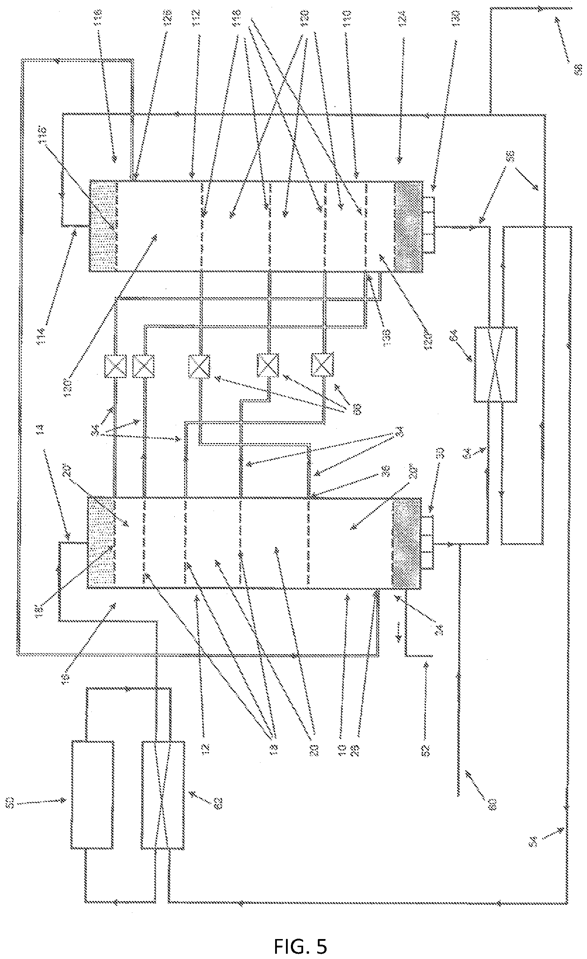

In Figure 5, a diagram illustrating operation of the evaporation unit shown in Figures 1 to 4 together with a condensing unit of the present invention is provided. The condensing unit is configured similarly to the evaporation unit and corresponding reference numerals preceded by '1' are employed.

As can be seen, the contaminated fluid fed into the evaporation unit is heated through heat exchange with a heat source (50) which may be a source of waste or exhaust heat from an industrial process, or may be provided by an alternative energy source. Contaminated fluid in the lower region (26) of the evaporating chamber (10) is split out into a contaminated fluid feed (52) of soiled fluid incapable of being recycled which is disposed of and a contaminated fluid feed (54) which is supplemented by a contaminated fluid make up line (60) and heated by heat exchange with fluid exiting the condensing chamber (110) via purified fluid outlet (130). The contaminated fluid feed is then passed back into the evaporation chamber (10) via a heat exchanger (62) and then via contaminated fluid inlet (14).

Condensation zones (120) within the condensation chamber (110) are fed with fluid vapour extracted from evaporation zones (20). Condensing fluid is fed onto the upper surface of the uppermost fragmentation plate (118') which then fragments and passes through the condensing chamber (110) under gravity. As this fluid passes through the chamber (110), additional fluid condenses from the cooling saturated vapour. This additional purified fluid is then collected in the lower region (124) of the chamber (110) and extracted therefrom via purified fluid outlet (130). In the illustrated device, all condensation zones (120) are filled with fragmentation bodies (not shown) for example Raschig rings.

Due to the process of condensation, the condensing fluid becomes warmer. This warmed purified fluid is passed via line (56) to a crossflow heat exchanger (64) where the acquired heat is recovered and used to pre-heat the contaminated fluid before being passed to the external heat source (50) for further heating.

The feed of purified fluid (56) is then split into a purified fluid take off line (58), with the remainder of the purified, now cooled, fluid being passed into the condensing chamber (110) via cooling fluid inlet (114).

The fluid vapour outlet lines (34) carry the evaporated fluid from specific evaporation zones (20) to the most appropriate condensing zones (120) to maximise evaporation and condensation driven by fans (66). As can be seen, the uppermost evaporation zone (20') which operates at the highest temperature of all of the evaporation zones is connected via line (34) to the lowermost condensation zone (120") which operates at the highest temperature of the condensation zones. The lowermost evaporation zone (20") which operates at the lowest temperature is connected to the uppermost condensation zone (120') which operates at the lowest temperature of the condensation zones. The second hottest (and second highest) evaporation zone is connected to the second lowest (and second hottest) condensing zone, and the second coolest (and second lowest) evaporation zone is connected to the second highest (and second coolest) condensation zone.

This system of interconnection can be continued for any number of additional evaporation/condensation zones.

Condensing chamber (110) is provided with a heated air outlet (126) which carries heated air (which may contain a low amount of fluid vapour) into the evaporation unit via heated air inlet (124).

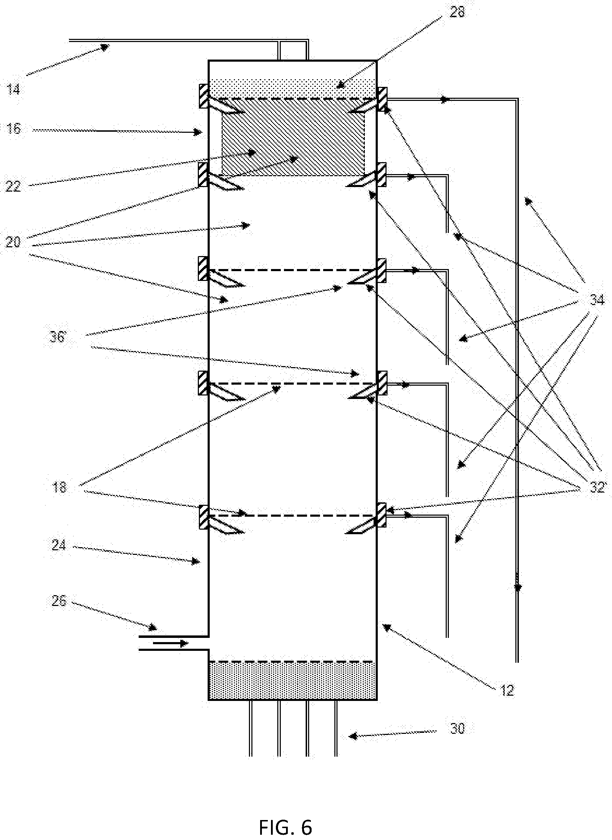

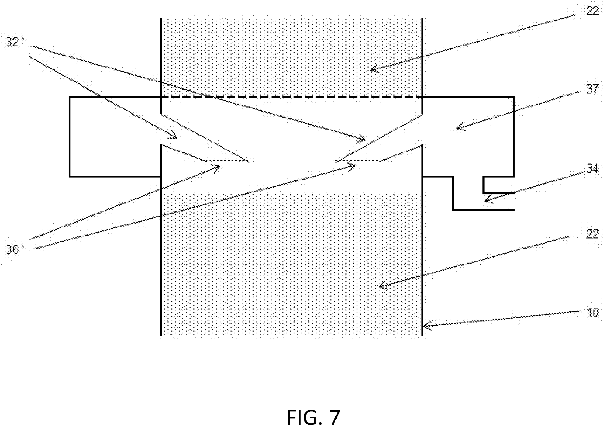

Figure 6 shows an alternative embodiment of the evaporation chamber of Fig. 1, in which fluid vapour outlets (32) are replaced by vapour extractors (32'). A side view of the vapour extraction process is shown in figure 7. The vapour extractors (32') project partially into the evaporation chamber (10) and are equally spaced around the walls of the chamber. At the end of each extractor (32') there is a drift eliminator (36') to prevent transfer of contaminated fluid droplets. To further prevent such transfers an overhang is fitted to the upper side of the extractor. The vapour extractors discharge into a toroidal shaped duct (37) which is in turn connected to the main duct (34) connecting to the condensation chamber.

### Example 1

Evaporation and condensing units configured as shown in Figure 5, having a height of 12 metres and a diameter of 75 cm, were used to desalinate saline water. The evaporation and condensing units included five evaporation / condensation zones. The sea water input temperature and evaporation zone temperatures were as follows:

| | |
|---|---|
| Input Hot Salt Water | 85°C |
| Section 1 (uppermost) | 76°C |
| Section 2 | 70°C |
| Section 3 | 64°C |
| Section 4 | 57°C |
| Section 5 (lowermost) | 52°C |

Results obtained from operating the units under these conditions confirm that a distilled water output over of 18,000 litres per 24 hours is achievable. The water quality was measured using standard conductivity meters and found to have total dissolved solids levels of less than 20ppm.

## Claims

1. Apparatus for purifying a fluid, comprising an evaporation unit (10) and a condensing unit (110),
wherein the evaporation unit comprises an evaporation unit chamber (12) having upper and lower regions (16, 24) and side walls, a contaminated fluid inlet (14) located in the upper region (16), a waste outlet (30) located in the lower region (24) and a plurality of vertically-spaced fragmentation plates (18) each spanning at least a part of the width of the chamber and each defining the upper limit of an evaporation zone (20), wherein each evaporation zone is provided with a fluid vapour outlet (32);
wherein the condensing unit (110) comprises a condensing unit chamber (112) having upper and lower regions (116, 124) and side walls, a condensing fluid inlet (114) located in the upper region (116), a condensed fluid outlet (130) located in the lower region (124) and a plurality of vertically-spaced fragmentation plates (118) each spanning at least a part of the width of the chamber and each defining the upper limit of a condensation zone (120), wherein each condensation zone is provided with a fluid vapour inlet,
wherein the fluid vapour outlet of the uppermost evaporation zone is connected to the fluid vapour inlet of the lowermost condensation zone,
wherein the fluid vapour outlet of the lowermost evaporation zone is connected to the fluid vapour inlet of the uppermost condensation zone,
wherein the plurality of evaporation zones (20) are configured to be operated at different temperatures with the uppermost evaporation zone being operated at the highest temperature and the lowermost evaporation zone being operated at the lowest temperature,
wherein the plurality of condensation zones (120) are configured to be operated at different temperatures with the uppermost condensation zone being operated at the lowest temperature and the lowermost condensation zone being operated at the highest temperature, and
wherein the apparatus is configured so that the contaminated fluid flows through the evaporation unit chamber (12) to become at least partly evaporated and that the condensing fluid flows through the condensing unit chamber (112) resulting in the evaporated fluid becoming at least partly condensed.

2. The apparatus of claim 1, wherein the fluid vapour outlet of the evaporation zone operated at the second highest temperature is connected to the fluid vapour inlet of the condensation zone operated at the second highest temperature and wherein the fluid vapour outlet of the evaporation zone operated at the second lowest temperature is connected to the fluid vapour inlet of the condensation zone operated at the second lowest temperature.

3. The apparatus of any preceding claim, wherein at least one of the fragmentation plates (18, 118) comprises a perforated plate or grating.

4. The apparatus of any preceding claim, wherein at least one of the fragmentation plates (18, 118) comprises a rim around its perimeter provided with a series of notches.

5. The apparatus of any preceding claim, wherein one or more of the evaporation zones (20) and/or condensation zones (120) is provided with fragmentation bodies (22).

6. The apparatus of any preceding claim, wherein the evaporation unit chamber (12) further comprises an air inlet (26) located in the lower region (24) of the evaporation unit chamber, wherein the condensing unit chamber further comprises an air outlet (126) located in the upper region (116) of the condensing unit chamber, and wherein the air outlet of the condensing unit is connected to the air inlet of the evaporation unit.

7. The apparatus of any preceding claim, wherein each fluid vapour outlet (32) comprises a vapour extractor (32') inclined substantially downwards.

8. The apparatus of claim 7, wherein the mouth of the extractor (32') is on the underside of the extractor and wherein the extractor further comprises a rim around the upper edge of the outlet so as to form an overhang protecting the outlet from fluid ingression.

9. A method for purifying a fluid comprising:
providing an evaporation unit (10) comprising an evaporation unit chamber (12) having upper and lower regions (16, 24) and side walls, a contaminated fluid inlet (14) located in the upper region (16), a waste outlet (30) located in the lower region (24) and a plurality of spaced-apart fragmentation plates (18) each spanning at least a part of the width of the chamber and each defining the upper limit of an evaporation zone (20);
providing a condensing unit (110) comprising a condensing unit chamber (112) having upper and lower regions (116, 124) and side walls, a condensing fluid inlet (114) located in the upper region (116), a condensed fluid outlet (130) located in the lower region (124) and a plurality of spaced-apart fragmentation plates (118) each spanning at least a part of the width of the chamber and each defining the upper limit of a condensation zone (120);
supplying contaminated fluid to the contaminated fluid inlet (14) of the evaporation unit and allowing the contaminated fluid to flow through the evaporation unit chamber to become at least partly evaporated;
operating the plurality of evaporation zones (20) at different temperatures from each other and operating the plurality of condensation zones (120) at different temperatures from each other;
feeding fluid vapour from the evaporation zone operated at the highest temperature to the condensation zone operated at the highest temperature;
feeding fluid vapour from the evaporation zone operated at the lowest temperature to the condensation zone operated at the lowest temperature;
supplying condensing fluid to the condensing fluid inlet (114) of the condensing unit and allowing the condensing fluid to flow through the condensing unit chamber resulting in the evaporated fluid becoming at least partly condensed; and
extracting the condensed fluid from the condensing unit chamber (112),
wherein the uppermost evaporation zone is operated at the highest temperature and the lowermost evaporation zone is operated at the lowest temperature, and wherein the uppermost condensation zone is operated at the lowest temperature and the lowermost condensation zone is operated at the highest temperature.

10. The method of claim 9, further comprising the step of feeding fluid vapour from the evaporation zone operated at the second highest temperature to the condensation zone operated at the second highest temperature.

11. The method of claim 9 or 10, further comprising the step of feeding fluid vapour from the evaporation zone operated at the second lowest temperature to the condensation zone operated at the second lowest temperature.

12. The method of any of claims 9 to 11, wherein the evaporation unit chamber further comprises an air inlet (26) located in the lower region (24) of the evaporation unit chamber and the condensing unit chamber further comprises an air outlet (126) located in the upper region (116) of the condensing unit chamber, the method further comprising the step of feeding air from the condensing unit chamber to the evaporation unit chamber.

## Patentansprüche

1. Vorrichtung zum Reinigen eines Fluids, umfassend eine Verdampfungseinheit (10) und eine Kondensationseinheit (110),
wobei die Verdampfungseinheit eine Verdampfungseinheitskammer (12) mit oberen und unteren Bereichen (16, 24) und Seitenwänden, einen Einlass für kontaminiertes Fluid (14), der im oberen Bereich (16) gelegen ist, einen Abfallauslass (30), der im unteren Bereich (24) gelegen ist, und eine Vielzahl vertikal beabstandeter Fragmentierungsplatten (18), die jeweils zumindest einen Teil der Breite der Kammer überspannen und jeweils die obere Grenze einer Verdampfungszone (20) definieren, umfasst, wobei jede Verdampfungszone mit einem Fluiddampfauslass (32) versehen ist;
wobei die Kondensationseinheit (110) eine Kondensationseinheitskammer (112) mit oberen und unteren Bereichen (116, 124) und Seitenwänden, einen Kondensationsfluideinlass (114), der im oberen Bereich (116) gelegen ist, einen Auslass für kondensiertes Fluid (130), der im unteren Bereich (124) gelegen ist, und eine Vielzahl vertikal beabstandeter Fragmentierungsplatten (118), die jeweils zumindest einen Teil der Breite der Kammer überspannen und jeweils die obere Grenze einer Kondensationszone (120) definieren, umfasst, wobei jede Kondensationszone mit einem Fluiddampfeinlass versehen ist;
wobei der Fluiddampfauslass der obersten Verdampfungszone mit dem Fluiddampfeinlass der untersten Kondensationszone verbunden ist,
wobei der Fluiddampfauslass der untersten Verdampfungszone mit dem Fluiddampfeinlass der obersten Kondensationszone verbunden ist,
wobei die Vielzahl von Verdampfungszonen (20) konfiguriert ist, bei verschiedenen Temperaturen betrieben zu werden, wobei die oberste Verdampfungszone bei der höchsten Temperatur betrieben wird und die unterste Verdampfungszone bei der niedrigsten Temperatur betrieben wird,
wobei die Vielzahl von Kondensationszonen (120) konfiguriert ist, bei verschiedenen Temperaturen betrieben zu werden, wobei die oberste Kondensationszone bei der niedrigsten Temperatur betrieben wird und die unterste Kondensationszone bei der höchsten Temperatur betrieben wird, und
wobei die Vorrichtung so konfiguriert ist, dass das kontaminierte Fluid durch die Verdampfungseinheitskammer (12) strömt, um zumindest teilweise verdampft zu werden, und dass das Kondensationsfluid durch die Kondensationseinheitskammer (112) strömt, was dazu führt, dass verdampftes Fluid zumindest teilweise kondensiert wird.

2. Vorrichtung nach Anspruch 1, wobei der Fluiddampfauslass der Verdampfungszone, der bei der höchsten Temperatur betrieben wird, mit dem Fluiddampfeinlass der Kondensationszone verbunden ist, die bei der zweithöchsten Temperatur betrieben wird, und wobei der Fluiddampfauslass der Verdampfungszone, die bei der zweitniedrigsten Temperatur betrieben wird, mit dem Fluiddampfeinlass der Kondensationszone verbunden ist, die bei zweitniedrigsten Temperatur betrieben wird.

3. Vorrichtung nach einem vorangehenden Anspruch, wobei zumindest eine der Fragmentierungsplatten (18, 118) eine perforierte Platte oder ein Gitter umfasst.

4. Vorrichtung nach einem vorangehenden Anspruch, wobei zumindest eine der Fragmentierungsplatten (18, 118) einen Rand um ihren Umfang umfasst, der mit einer Reihe von Kerben versehen ist.

5. Vorrichtung nach einem vorangehenden Anspruch, wobei eine oder mehrere der Verdampfungszonen (20) und/oder der Kondensationszonen (120) mit Fragmentierungskörpern (22) versehen ist.

6. Vorrichtung nach einem vorangehenden Anspruch, wobei die Verdampfungseinheitskammer (12) ferner einen Lufteinlass (26) umfasst, der im unteren Bereich (24) der Verdampfungseinheitskammer gelegen ist, wobei die Kondensationseinheitskammer ferner einen Luftauslass (126) umfasst, der sich im oberen Bereich (116) der Kondensationseinheitskammer gelegen ist, und wobei der Luftauslass der Kondensationseinheit mit dem Lufteinlass der Verdampfungseinheit verbunden ist.

7. Vorrichtung nach einem vorangehenden Anspruch, wobei jeder Fluiddampfauslass (32) einen Dampfextraktor (32') umfasst, der im Wesentlichen nach unten geneigt ist.

8. Vorrichtung nach Anspruch 7, wobei die Mündung des Extraktors (32') an der Unterseite des Extraktors liegt und wobei der Extraktor ferner einen Rand um die obere Kante des Auslasses umfasst, um so einen Überhang zu bilden, der den Auslass vor einem Fluideintritt schützt.

9. Verfahren zum Reinigen eines Fluids, umfassend:
Vorsehen einer Verdampfungseinheit (10), die eine Verdampfungseinheitskammer (12) mit oberen und unteren Bereichen (16, 24) und Seitenwänden, einen Einlass für kontaminiertes Fluid (14), der im oberen Bereich (16) gelegen ist, einen Abfallauslass (30), der im unteren Bereich (24) gelegen ist, und eine Vielzahl vertikal beabstandeter Fragmentierungsplatten (18), die jeweils zumindest einen Teil der Breite der Kammer überspannen und jeweils die obere Grenze einer Verdampfungszone (20) definieren, umfasst;
Vorsehen einer Kondensationseinheit (110), die eine Kondensationseinheitskammer (112) mit oberen und unteren Bereichen (116, 124) und Seitenwänden, einen Kondensationsfluideinlass (114), der im oberen Bereich (116) gelegen ist, einen Auslass für kondensiertes Fluid (130), der im unteren Bereich (124) gelegen ist, und eine Vielzahl vertikal beabstandeter Fragmentierungsplatten (118), die jeweils zumindest einen Teil der Breite der Kammer überspannen und jeweils die obere Grenze einer Kondensationszone (120) definieren, umfasst;
Zuleiten von kontaminierten Fluid zum Einlass für kontaminiertes Fluid (14) der Verdampfungseinheit und Hindurchströmenlassen des kontaminierten Fluids durch die Verdampfungseinheitskammer, um zumindest teilweise verdampft zu werden;
Betreiben der Vielzahl von Verdampfungszonen (20) bei verschiedenen Temperaturen und Betreiben der Kondensationszonen (120) bei verschiedenen Temperaturen;
Zuführen von Fluiddampf von der Verdampfungszone, die bei der höchsten Temperatur betrieben wird, zur Kondensationszone, die bei der höchsten Temperatur betrieben wird;
Zuführen von Fluiddampf von der Verdampfungszone, die bei der niedrigsten Temperatur betrieben wird, zur Kondensationszone, die bei der niedrigsten Temperatur betrieben wird;
Zuleiten von Kondensationsfluid zum Kondensationsfluideinlass (114) der Kondensationseinheit und Hindurchströmenlassen des kondensierten Fluids durch die Kondensationseinheitskammer, was dazu führt, dass das verdampfte Fluid zumindest teilweise kondensiert wird; und
Extrahieren des kondensierten Fluids aus der Kondensationseinheitskammer (112),
wobei die oberste Verdampfungszone bei der höchsten Temperatur betrieben wird und die unterste Verdampfungszone bei der niedrigsten Temperatur betrieben wird und wobei die oberste Kondensationszone bei der niedrigsten Temperatur betrieben wird und die unterste Kondensationszone bei der höchsten Temperatur betrieben wird.

10. Verfahren nach Anspruch 9, ferner umfassend den Schritt zum Zuführen von Fluiddampf von der Verdampfungszone, die bei der zweithöchsten Temperatur betrieben wird, zur Kondensationszone, die bei der zweithöchsten Temperatur betrieben wird.

11. Verfahren nach Anspruch 9 oder 10, ferner umfassend den Schritt zum Zuführen von Fluiddampf von der Verdampfungszone, die bei der zweitniedrigsten Temperatur betrieben wird, zur Kondensationszone, die bei der zweitniedrigsten Temperatur betrieben wird.

12. Verfahren nach einem der Ansprüche 9 bis 11, wobei die Verdampfungseinheitskammer ferner einen Lufteinlass (26) umfasst, der im unteren Bereich (24) der Verdampfungseinheitskammer gelegen ist, und die Kondensationseinheitskammer ferner einen Luftauslass (126) umfasst, der im oberen Bereich (116) der Kondensationseinheitskammer gelegen ist; wobei das Verfahren ferner den Schritt zum Zuführen von Luft aus der Kondensationseinheitskammer zur Verdampfungseinheitskammer umfasst.

## Revendications

1. Appareil destiné à purifier un fluide, comprenant une unité d'évaporation (10) et une unité de condensation (110),
où l'unité d'évaporation comprend une enceinte d'unité d'évaporation (12) présentant des régions supérieure et inférieure (16, 24) et des parois latérales, une entrée de fluide contaminé (14) située dans la région supérieure (16), une sortie de déchet (30) située dans la région inférieure (24) et une pluralité de plateaux de fractionnement verticalement espacés (18) s'étendant chacun au moins sur une partie de la largeur de l'enceinte et définissant chacun la limite supérieure d'une zone d'évaporation (20), où chaque zone d'évaporation est dotée d'une sortie de vapeur de fluide (32) ;
où l'unité de condensation (110) comprend une enceinte d'unité de condensation (112) présentant des régions supérieure et inférieure (116, 124) et des parois latérales, une entrée de fluide de condensation (114) située dans la région supérieure (116), une sortie de fluide condensé (130) située dans la région inférieure (124) et une pluralité de plateaux de fractionnement verticalement espacés (118) s'étendant chacun au moins sur une partie de la largeur de l'enceinte et définissant chacun la limite supérieure d'une zone de condensation (120), où chaque zone de condensation est dotée d'une entrée de vapeur de fluide,
où la sortie de vapeur de fluide de la zone d'évaporation la plus haute est reliée à l'entrée de vapeur de fluide de la zone de condensation la plus basse,
où la sortie de vapeur de fluide de la zone d'évaporation la plus basse est reliée à l'entrée de vapeur de fluide de la zone de condensation la plus haute,
où la pluralité de zones d'évaporation (20) sont configurées pour être mises en oeuvre à des températures différentes, la zone d'évaporation la plus haute étant mise en oeuvre à la température la plus élevée et la zone d'évaporation la plus basse étant mise en oeuvre à la température la plus basse,
où la pluralité de zones de condensation (120) sont configurées pour être mises en oeuvre à des températures différentes, la zone de condensation la plus haute étant mise en oeuvre à la température la plus basse et la zone de condensation la plus basse étant mise en oeuvre à la température la plus élevée, et
où l'appareil est configuré de sorte que le fluide contaminé circule à travers l'enceinte d'unité d'évaporation (12) afin d'être au moins partiellement évaporé et de sorte que le fluide de condensation circule à travers l'enceinte d'unité de condensation (112), ce qui permet de condenser au moins partiellement le fluide évaporé.

2. Appareil selon la revendication 1, dans lequel la sortie de vapeur de fluide de la zone d'évaporation mise en oeuvre à la deuxième température la plus élevée est reliée à l'entrée de vapeur de fluide de la zone de condensation mise en oeuvre à la deuxième température la plus élevée et où la sortie de vapeur de fluide de la zone d'évaporation mise en oeuvre à la deuxième température la plus basse est reliée à l'entrée de vapeur de fluide de la zone de condensation mise en oeuvre à la deuxième température la plus basse.

3. Appareil selon l'une quelconque des revendications précédentes, dans lequel au moins l'un des plateaux de fractionnement (18, 118) comprend un plateau perforé ou une grille.

4. Appareil selon l'une quelconque des revendications précédentes, dans lequel au moins l'un des plateaux de fractionnement (18, 118) comprend une bordure autour de son périmètre dotée d'une série d'encoches.

5. Appareil selon l'une quelconque des revendications précédentes, dans lequel une ou plusieurs des zones d'évaporation (20) et/ou des zones de condensation (120) sont dotées de corps de fractionnement (22).

6. Appareil selon l'une quelconque des revendications précédentes, dans lequel l'enceinte d'unité d'évaporation (12) comprend en outre une entrée d'air (26) située dans la région inférieure (24) de l'enceinte d'unité d'évaporation, où l'enceinte d'unité de condensation comprend en outre une sortie d'air (126) située dans la région supérieure (116) de l'enceinte d'unité de condensation, et où la sortie d'air de l'unité de condensation est reliée à l'entrée d'air de l'unité d'évaporation.

7. Appareil selon l'une quelconque des revendications précédentes, dans lequel chaque sortie de vapeur de fluide (32) comprend un extracteur de vapeur (32') incliné sensiblement vers le bas.

8. Appareil selon la revendication 7, dans lequel la bouche de l'extracteur (32') se trouve sur la face inférieure de l'extracteur et où l'extracteur comprend en outre une bordure autour du bord supérieur de la sortie de sorte à former une avancée protégeant la sortie d'une pénétration de fluide.

9. Procédé destiné à purifier un fluide comprenant les étapes consistant à :
fournir une unité d'évaporation (10) comprenant une enceinte d'unité d'évaporation (12) présentant des régions supérieure et inférieure (16, 24) et des parois latérales, une entrée de fluide contaminé (14) située dans la région supérieure (16), une sortie de déchet (30) située dans la région inférieure (24) et une pluralité de plateaux de fractionnement verticalement espacés (18) s'étendant chacun au moins sur une partie de la largeur de l'enceinte et définissant chacun la limite supérieure d'une zone d'évaporation (20) ;
fournir une unité de condensation (110) comprenant une enceinte d'unité de condensation (112) présentant des régions supérieure et inférieure (116, 124) et des parois latérales, une entrée de fluide de condensation (114) située dans la région supérieure (116), une sortie de fluide condensé (130) située dans la région inférieure (124) et une pluralité de plateaux de fractionnement verticalement espacés (118) s'étendant chacun au moins sur une partie de la largeur de l'enceinte et définissant chacun la limite supérieure d'une zone de condensation (120) ;
alimenter en fluide contaminé l'entrée de fluide contaminé (14) de l'unité d'évaporation et laisser le fluide contaminé circuler à travers l'enceinte d'unité d'évaporation de sorte à l'évaporer au moins partiellement ;
mettre en oeuvre la pluralité de zones d'évaporation (20) à des températures différentes pour chacune d'elles et mettre en oeuvre la pluralité de zones de condensation (120) à des températures différentes pour chacune d'elles ;
alimenter en vapeur de fluide issue de la zone d'évaporation mise en oeuvre à la température la plus élevée la zone de condensation mise en oeuvre à la température la plus élevée ;
alimenter en vapeur de fluide issue de la zone d'évaporation mise en oeuvre à la température la plus basse la zone de condensation mise en oeuvre à la température la plus basse ;
alimenter en fluide de condensation l'entrée de fluide de condensation (114) de l'unité de condensation et laisser le fluide de condensation circuler à travers l'enceinte d'unité de condensation, ce qui permet de condenser au moins partiellement le fluide évaporé ; et
extraire le fluide condensé de l'enceinte d'unité de condensation (112),
où la zone d'évaporation la plus haute est mise en oeuvre à la température la plus élevée et la zone d'évaporation la plus basse est mise en oeuvre à la température la plus basse, et où la zone de condensation la plus haute est mise en oeuvre à la température la plus basse et la zone de condensation la plus basse est mise en oeuvre à la température la plus élevée.

10. Procédé selon la revendication 9, comprenant en outre l'étape consistant à alimenter en vapeur de fluide issue de la zone d'évaporation mise en oeuvre à la deuxième température la plus élevée la zone de condensation mise en oeuvre à la deuxième température la plus élevée.

11. Procédé selon la revendication 9 ou 10, comprenant en outre l'étape consistant à alimenter en vapeur de fluide issue de la zone d'évaporation mise en oeuvre à la deuxième température la plus basse la zone de condensation mise en oeuvre à la deuxième température la plus basse.

12. Procédé selon l'une quelconque des revendications 9 à 11, dans lequel l'enceinte d'unité d'évaporation comprend en outre une entrée d'air (26) située dans la région inférieure (24) de l'enceinte d'unité d'évaporation et l'enceinte d'unité de condensation comprend en outre une sortie d'air (126) située dans la région supérieure (116) de l'enceinte d'unité de condensation, le procédé comprenant en outre l'étape consistant à alimenter en air issu de l'enceinte d'unité de condensation l'enceinte d'unité d'évaporation.
